(19) Europäisches Patentamt / European Patent Office / Office européen des brevets

(11) **EP 4 664 799 A1**

(12) **EUROPEAN PATENT APPLICATION**
published in accordance with Art. 153(4) EPC

(43) Date of publication:
**17.12.2025 Bulletin 2025/51**

(21) Application number: **24769793.1**

(22) Date of filing: **05.03.2024**

(51) International Patent Classification (IPC):
**H04J 3/16** (2006.01)

(52) Cooperative Patent Classification (CPC):
**H04J 3/16; H04L 1/00**

(86) International application number:
**PCT/CN2024/080051**

(87) International publication number:
**WO 2024/188099 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 CN 202310278199**

(71) Applicant: **Huawei Technologies Co., Ltd.
Shenzhen, Guangdong 518129 (CN)**

(72) Inventor: **SU, Wei
Shenzhen, Guangdong 518129 (CN)**

(74) Representative: **Huawei European IPR
Huawei Technologies Duesseldorf GmbH
Riesstraße 25
80992 München (DE)**

(54) **DATA TRANSMISSION METHOD AND APPARATUS**

(57) Embodiments of this application provide a data transmission method and an apparatus, and are applied to an optical transport network. The method includes: A sending device obtains service data, maps the service data to a data frame, and sends the data frame to a receiving device. The data frame includes an overhead area and a payload area, the payload area includes a plurality of blocks, the overhead area includes indication information, and the indication information indicates whether a block in the plurality of blocks in the payload area is a rate compensation block. According to the method disclosed in this application, a design of fixed padding of a rate compensation block can be simplified, and rate compensation can be effectively performed, so that buffering and a delay are reduced, and system transmission performance is improved.

600

```
Sending                              Receiving
device                                device
  |                                      |
S610: Obtain service data               |
  |                                      |
S620: Map the service data to a         |
      data frame                        |
  |                                      |
  |------- S630: Data frame ----------->|
  |                                      |
  |                    S640: Demap the service data
  |                    from the data frame based on
  |                        indication information
  |                                      |
```

FIG. 6

Processed by Luminess, 75001 PARIS (FR)

**Description**

This application claims priority to Chinese Patent Application No. 202310278199.3, filed with the China National Intellectual Property Administration on March 10, 2023, and entitled "DATA TRANSMISSION METHOD AND APPARATUS", which is incorporated herein by reference in its entirety.

**TECHNICAL FIELD**

This application relates to the field of optical communication, and more specifically, to a data transmission method and an apparatus.

**BACKGROUND**

Based on a wavelength division multiplexing technology, an optical transport network (optical transport network, OTN) may provide a higher transmission rate, higher transmission efficiency, and a better operations, administration and maintenance (operations, administration and maintenance, OAM) capability, and has become a mainstream technology of a backbone transmission network. The OTN has flexible bandwidth pipes oriented toward efficient bearer in metro networks, to implement efficient bearer of services at a granularity of 10 Mbit/s to 1 Gbit/s.

As service bearer requirements increase, how to provide effective rate compensation, reduce buffering and a processing delay, and improve transmission performance is an urgent problem to be resolved.

**SUMMARY**

Embodiments of this application provide a data transmission method and an apparatus, to provide effective rate compensation and improve system transmission performance.

According to a first aspect, a data transmission method is provided. The method may be performed by a sending device or a component (for example, a chip or a chip system) of the sending device. This is not limited in this application. The method includes: obtaining service data, mapping the service data to a data frame, and sending the data frame to a receiving device. The data frame includes an overhead area and a payload area, the payload area includes a plurality of blocks, the overhead area includes indication information, and the indication information indicates whether a block in the plurality of blocks in the payload area is a rate compensation block.

Based on the foregoing solution, the indication information in the overhead area indicates whether the block in the payload area of the current data frame is the rate compensation block, so that rate compensation can be performed at a specific position of a specific data frame, to effectively eliminate a rate loss caused by deletion of an alignment marker (alignment marker, AM), simplify a rate compensation process, reduce buffering and a processing delay, and improve transmission performance.

For example, when the indication information indicates that the block in the plurality of blocks in the payload area is the rate compensation block, in a process of mapping the service data to the data frame, the sending device further inserts the rate compensation block into the block in the plurality of blocks in the payload area of the data frame.

With reference to the first aspect, in some implementations of the first aspect, first indication information includes a first multiframe identifier and a second multiframe identifier. The second multiframe identifier is a second multiframe number in each X-frame multiframe, where numbers are integers from 0 to X-1 sequentially, and indicate frame numbers of X data frames included in each X-frame multiframe. The first multiframe identifier is a first multiframe number in each X-frame multiframe included in every Y X-frame multiframes, where numbers are 0 to Y-1 sequentially, and indicate X-frame multiframe numbers of Y X-frame multiframes included in every Y X-frame multiframes. In every Y X-frame multiframes, Q data frames that include a rate compensation block are determined based on the first multiframe identifier and the second multiframe identifier, the Q data frames that include the rate compensation block are discretely distributed in every Y X-frame multiframes, and X, Y, and Q are integers greater than 0. It should be understood that, the X-frame multiframe is an X-multiframe including X single frames. For example, if a value of X is 256, a 256-frame multiframe indicates a 256-multiframe including 256 single frames. In this case, second multiframe identifiers are numbers corresponding to the 256 single frames, and values of the second multiframe identifiers are integers from 0 to 255 sequentially.

Optionally, in this embodiment of this application, the first multiframe number may also be referred to as a value of the first multiframe identifier. Unless otherwise specified, the first multiframe number and the value of the first multiframe identifier may be replaced with each other. Similarly, the second multiframe number may alternatively be replaced with a value of the second multiframe identifier. This is not specifically limited in this application.

For example, the value of X is 256, a value of Y is 80 or 160, and a value of Q is 237. For example, if the indication information indicates that the block in the plurality of blocks in the payload area is the rate compensation block, when a value range of the first multiframe number is 0 to 79, second multiframe numbers corresponding to M data frames in the Q data frames that include the rate compensation block may be 0, 85, and 171, and second multiframe numbers corresponding to data frames other than the M data frames in the Q data frames that include the rate compensation block are 0 and 85. M is an integer greater than 0. For example, a value of M is 77. When a value range of the first multiframe number is 0 to 159, second multiframe numbers corresponding to N data frames in the Q data frames that include the rate compensation block may be 0 and 128, and second multiframe numbers corresponding to a data frame other than the N data frames in the Q data frames that include the rate compensation block are 0. N is an integer greater than 0. For example, a value of N is 77. Based on the foregoing solution, a combination of the first multiframe identifier and the second multiframe identifier indicates whether the payload area of the data frame includes a rate compensation block, and it can be ensured that rate compensation blocks are evenly inserted, thereby providing effective rate compensation.

With reference to the first aspect, in some implementations of the first aspect, the first multiframe number and the second multiframe number that are associated with the Q data frames that include the rate compensation block are fixed in every Y X-frame multiframes.

With reference to the first aspect, in some implementations of the first aspect, each X-frame multiframe includes $\lfloor Q/Y \rfloor$ or $\lfloor Q/Y \rfloor+1$ of the Q data frames, and second multiframe numbers of the $\lfloor Q/Y \rfloor$ or $\lfloor Q/Y \rfloor+1$ data frames are distributed discretely. $\lfloor \rfloor$ indicates a round-down function, for example, $\lfloor 3.1 \rfloor=3$, and $\lfloor 3 \rfloor=3$. This is similar for $\lfloor \rfloor$ in the following. Details are not described again.

For example, when X=255, Y=80, and Q=237, $\lfloor Q/Y \rfloor=2$ or $\lfloor Q/Y \rfloor+1=3$. In other words, each 255-frame multiframe includes two or three rate compensation blocks. When X=255, Y=160, and Q=237, $\lfloor Q/Y \rfloor=1$ or $\lfloor Q/Y \rfloor+1=2$. In other words, each 255-frame multiframe includes one or two rate compensation blocks.

With reference to the first aspect, in some implementations of the first aspect, a proportion of rate compensation blocks in every Y X-frame multiframes is Q/(X*Y*Z), where Z is a quantity of a plurality of blocks included in a payload area of each data frame, and a value of Z is an integer greater than 0. For example, when the value of X is 80 or 160, the value of Y is 256, and a value of Z is 237 or 118.5, a value of X*Y*Z is 80*256*237 or 160*256*118.5.

For example, when a bit rate of the data frame is 800 Gbit/s Ethernet, a size of the rate compensation block is 2*257 bits. When a bit rate of the data frame is 1.6 Tbit/s Ethernet, a size of the rate compensation block is 4*257 bits. In other words, the size of the rate compensation block may be a multiple of 2*257 bits, or an even multiple of 257 bits. Based on this solution, when the rate compensation is performed, the size of the rate compensation block is the same as a size of a rate adaptation unit as much as possible. In this way, confusion of a sequence of two 257b code block streams can be avoided, the rate compensation can be effectively provided, and system transmission performance can be improved.

With reference to the first aspect, in some implementations of the first aspect, a position of the rate compensation block in the payload area is predefined.

Optionally, the sending device sends second indication information to the receiving device, where the second indication information indicates the position of the rate compensation block in the payload area. Optionally, the second indication information is carried in the overhead area of the data frame, or the second indication information is decoupled from the data frame and is sent independently. This is not limited in this application.

With reference to the first aspect, in some implementations of the first aspect, the data frame is an optical transport network OTN frame. For example, the OTN frame may be an ODUk frame or an ODUflex frame.

According to a second aspect, a data transmission method is provided. The method may be performed by a receiving device or a component (for example, a chip or a chip system) of the receiving device. This is not limited in this application. The method includes: receiving a data frame, and demapping service data from the data frame based on indication information. The data frame includes an overhead area and a payload area, the overhead area includes the indication information, the payload area includes a plurality of blocks, and the indication information indicates whether a block in the plurality of blocks in the payload area is a rate compensation block.

With reference to the second aspect, in some implementations of the second aspect, demapping the service data from the data frame based on the indication information includes: when the indication information indicates that the block in the plurality of blocks in the payload area is the rate compensation block, deleting the block in the plurality of blocks in the payload area; and obtaining the service data carried in a block other than the block in the plurality of blocks in the payload area.

With reference to the second aspect, in some implementations of the second aspect, first indication information includes a first multiframe identifier and a second multiframe identifier. The second multiframe identifier is a second multiframe number in each X-frame multiframe, and the first multiframe identifier is a first multiframe number in every Y X-frame multiframes. In every Y X-frame multiframes, Q data frames that include a rate compensation block are determined based on the first multiframe identifier and the second multiframe identifier, the Q data frames that include the rate compensation block are discretely distributed in every Y X-frame multiframes, and X, Y, and Q are integers greater than 0.

With reference to the second aspect, in some implementations of the second aspect, the first multiframe number and the second multiframe number that are associated with the Q data frames that include the rate compensation block are fixed in every Y X-frame multiframes.

With reference to the second aspect, in some implementations of the second aspect, each X-frame multiframe includes $\lfloor Q/Y \rfloor$ or $\lfloor Q/Y \rfloor + 1$ of the Q data frames, and second multiframe numbers of the $\lfloor Q/Y \rfloor$ or $\lfloor Q/Y \rfloor + 1$ data frames are distributed discretely.

With reference to the second aspect, in some implementations of the second aspect, a proportion of rate compensation blocks in every Y X-frame multiframes is Q/(X*Y*Z), where Z is a quantity of a plurality of blocks included in a payload area of each data frame, and X*Y*Z is an integer greater than 0.

With reference to the second aspect, in some implementations of the second aspect, a position of the rate compensation block in the payload area is predefined.

With reference to the second aspect, in some implementations of the second aspect, the data frame is an optical transport network OTN frame.

For beneficial effects of the method shown in the second aspect and the possible designs of the second aspect, refer to the beneficial effects in the first aspect and the possible designs of the first aspect.

According to a third aspect, a data transmission apparatus is provided. The apparatus is configured to perform the method provided in the first aspect. Specifically, the data transmission apparatus may include a unit and/or module configured to perform the method provided in the first aspect or any one of the foregoing implementations of the first aspect.

In an implementation, the apparatus is a sending device. A transceiver module may be a transceiver or an input/output interface. A processing module may be at least one processor. Optionally, the transceiver may be a transceiver circuit. Optionally, the input/output interface may be an input/output circuit.

In another implementation, the apparatus is a chip, a chip system, or a circuit in a sending device. A transceiver module may be an input/output interface, an interface circuit, an output circuit, an input circuit, a pin, a related circuit, or the like on the chip, the chip system, or the circuit. A processing module may be at least one processor, processing circuit, logic circuit, or the like.

For beneficial effects of the method shown in the third aspect and the possible designs of the third aspect, refer to the beneficial effects in the first aspect and the possible designs of the first aspect.

According to a fourth aspect, a data transmission apparatus is provided. The apparatus is configured to perform the method provided in the second aspect. Specifically, the data transmission apparatus may include a unit and/or module configured to perform the method provided in the second aspect or any one of the foregoing implementations of the second aspect.

In an implementation, the apparatus is a receiving device. A transceiver module may be a transceiver or an input/output interface. A processing module may be at least one processor. Optionally, the transceiver may be a transceiver circuit. Optionally, the input/output interface may be an input/output circuit.

In another implementation, the apparatus is a chip, a chip system, or a circuit in a receiving device. A transceiver module may be an input/output interface, an interface circuit, an output circuit, an input circuit, a pin, a related circuit, or the like on the chip, the chip system, or the circuit. A processing module may be at least one processor, processing circuit, logic circuit, or the like.

For beneficial effects of the method shown in the fourth aspect and the possible designs of the fourth aspect, refer to the beneficial effects in the second aspect and the possible designs of the second aspect.

According to a fifth aspect, a processor is provided, and is configured to perform the method provided in the foregoing aspects. Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code executed by a device, and the program code is used to perform the method provided in any one of the implementations of the first aspect or the second aspect.

According to a seventh aspect, a computer program product including instructions is provided. When the computer program product runs on a computer, the computer is enabled to perform the method provided in any one of the implementations of the first aspect or the second aspect.

According to an eighth aspect, a chip is provided. The chip includes a processor and a communication interface. The processor reads, through the communication interface, instructions stored in a memory, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to a ninth aspect, an optical communication system is provided, including the data transmission apparatus according to the third aspect and the data transmission apparatus according to the fourth aspect.

For beneficial effects brought by the third aspect to the ninth aspect, refer to descriptions of the beneficial effects in the first aspect. Details are not described herein again.

## BRIEF DESCRIPTION OF DRAWINGS

FIG. 1 is a diagram of an OTN optical network system to which an embodiment of this application is applicable;
FIG. 2 is a diagram of a possible hardware structure of a network device;
FIG. 3 is a diagram of a frame structure of an OTN frame applicable to an embodiment of this application;
FIG. 4 is a diagram of a frame structure of an ODUflex frame according to an embodiment of this application;
FIG. 5 is a diagram of a frame structure of another ODUflex frame according to an embodiment of this application;
FIG. 6 is a schematic flowchart of a data transmission method according to an embodiment of this application;
FIG. 7 is a diagram of a structure of an OTN apparatus 700 according to an embodiment of this application; and
FIG. 8 is a diagram of a structure of an OTN apparatus 800 according to an embodiment of this application.

## DESCRIPTION OF EMBODIMENTS

The following describes technical solutions of embodiments of this application with reference to accompanying drawings.

Embodiments of this application are applicable to an optical network like an OTN. One OTN is usually formed by connecting a plurality of devices through an optical fiber, and may be formed into different topology types such as a linear topology, a ring topology, and a mesh topology based on specific requirements.

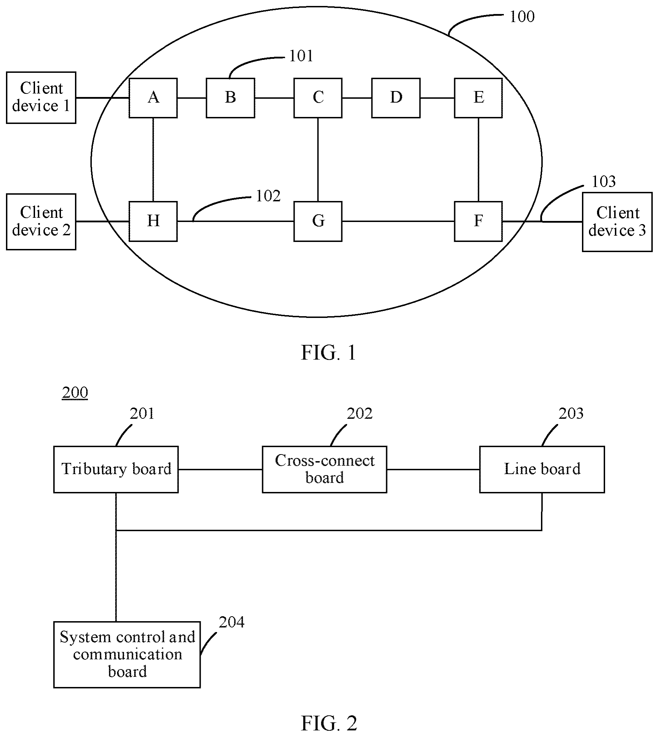

FIG. 1 is a diagram of an OTN optical network system to which an embodiment of this application is applicable. As shown in FIG. 1, an OTN 100 includes eight interconnected OTN devices 101, namely, devices A to H. 102 indicates an optical fiber, configured to connect two devices. 103 indicates a client service interface, configured to receive or send client service data. As shown in FIG. 1, the OTN 100 is configured to perform transmission of service data for client devices 1 to 3. A client device is connected to an OTN device through a client service interface. For example, in FIG. 1, the client devices 1 to 3 are respectively connected to the OTN devices A, H, and F.

Based on an actual requirement, one OTN device may have different functions. Generally, the OTN device includes an optical layer device, an electrical layer device, and a photoelectric hybrid device. The optical layer device is a device that can process an optical layer signal, for example, an optical amplifier and an optical add/drop multiplexer. The optical amplifier is configured to amplify an optical signal, to support a longer transmission distance while ensuring specific performance of the optical signal. The optical add/drop multiplexer is configured to perform space transformation on the optical signal, so that the optical signal can be output from different output ports (sometimes referred to as directions). The electrical layer device is a device that can process an electrical layer signal, for example, a device that can process an OTN signal. The photoelectric hybrid device is a device that has a capability of processing an optical layer signal and an electrical layer signal. It should be noted that, one OTN device may integrate a plurality of different functions based on a specific integration requirement. Technical solutions provided in this application are applicable to OTN devices that have different forms and degrees of integration and that include an electrical layer function.

It should be noted that a data frame structure used by the OTN device in embodiments of this application is an OTN frame. The OTN frame is used to carry various types of service data and provide rich management and monitoring functions. The OTN frame may be an optical data unit (Optical Data Unit k, ODUk) frame, an ODUCn frame, a flexible optical data unit (Flexible Optical Data Unit, ODUflex) frame, an optical transport unit k (optical transport unit k, OTUk) frame, an OTUCn frame, a flexible OTN (FlexO) frame, or the like. A difference between an ODU frame and an OTU frame lies in that the OTU frame includes an ODU frame and an OTU overhead. k indicates different rate levels. For example, k=1 indicates 2.5 Gbps, k=4 indicates 100 Gbps, and Cn indicates a variable rate, and is specifically a rate that is a positive integer multiple of 100 Gbps. Unless otherwise specified, the ODU frame is any of the ODUk frame, the ODUCn frame, or the ODUflex frame, and the OTU frame is any of the OTUk frame, the OTUCn frame, or the FlexO frame. It should be further noted that with development of an OTN technology, a new type of OTN frame may be defined, and is also applicable to this application.

FIG. 2 is a diagram of a possible hardware structure of a network device, for example, one of the OTN devices A to H in FIG. 1. Specifically, an OTN device 200 includes a tributary board 201, a cross-connect board 202, a line board 203, an optical layer processing board (not shown in the figure), and a system control and communication board 204. It should be noted that the network device may include different types and quantities of boards based on specific requirements. For example, a network device used as a core node includes no tributary board 201. For another example, a network device used as an edge node includes a plurality of tributary boards 201, or includes no optical cross-connect board 202. For still another example, a network device supporting only an electrical layer function may include no optical layer processing board.

The tributary board 201, the cross-connect board 202, and the line board 203 are configured to process an electrical layer signal of an OTN (for example, an ODU frame in the OTN). The tributary board 201 is configured to receive and send various client services, for example, a synchronous digital hierarchy (synchronous digital hierarchy, SDH) service, a packet service, an Ethernet service, and a fronthaul service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame, and demap the service data from the data frame. The cross-connect board 202 is configured to exchange a data frame, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex a line-side data frame, or map and demap a line-side data frame. The system control and communication board 204 is configured to implement system control, and may specifically collect information from different boards or send a control instruction to a corresponding board.

It should be noted that, unless otherwise specified, there may be one or more specific components (for example, signal processors). This is not limited in this application. Types, function designs, or a quantity of boards included in the device are not limited in this application. It should be further noted that, in specific implementation, the foregoing two boards may alternatively be designed as one board. In addition, the network device may further include a standby power supply, a fan for heat dissipation of the device, an auxiliary board for providing an external alarm or accessing an external clock, and the like.

For ease of understanding of embodiments of this application, the following descriptions are provided.

1. In embodiments of this application, "first", "second", and various numbers in embodiments shown below are merely used for differentiation for ease of description, and are not used to limit the scope of embodiments of this application. Sequence numbers of the following processes do not mean an execution sequence. The execution sequence of the processes should be determined based on functions and internal logic of the processes, and should not constitute any limitation on an implementation process of embodiments of this application.

2. In embodiments of this application, the terms "include", "have", and any variants thereof are intended to cover non-exclusive inclusion. For example, a process, method, system, product, or device including a series of steps or units is not necessarily limited to those steps or units that are expressly listed, but may include another step or unit not expressly listed or inherent to the process, method, product, or device.

3. In embodiments of this application, terms such as "example" or "for example" indicate giving an example, an illustration, or a description. Any embodiment or design scheme described with "example" or "for example" should not be explained as being more preferred or having more advantages than another embodiment or design scheme. Use of the terms such as "example" or "for example" is intended to present a related concept in a specific manner for ease of understanding.

4. In embodiments of this application, a "protocol" may be a standard protocol in the OTN field, for example, including the ITU-T G.709 standard protocol and a related protocol applied to a future OTN system. This is not limited in this application.

5. In embodiments of this application, "indicates" may include direct indication and indirect indication. When a piece of information indicates A, the information may directly indicate A or indirectly indicate A, but it does not indicate that the information definitely carries A.

6. In embodiments of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c, where a, b, and c may be singular or plural.

7. In embodiments of this application, presetting may include predefining, for example, protocol defining. "Predefining" may be implemented by pre-storing corresponding code or a corresponding table in a device, or may be implemented in another manner of indicating related information. A specific implementation of the "predefining" is not limited in this application.

8. In embodiments of this application, the character "*" is an operation symbol, and indicates a product.

An OTN has become a mainstream technology used on a transport network because of high bandwidth, large capacity, high reliability, and low delay features of the OTN; is widely used on backbone, metro core, and metro aggregation networks; and has flexible bandwidth pipes oriented toward efficient bearer in metro networks, to implement efficient bearer of services at a granularity of 10 Mbit/s to 1 Gbit/s. For mapping 400GE to an ODUflex frame, a transmitter performs rate compensation in a manner of consecutively inserting Z*66b rate compensation (rate compensation, RC) code blocks into each Z*20k 66b code block stream. Correspondingly, a receiver identifies an RC insertion position by searching for the consecutive Z*66b RC code blocks, and processing costs are high.

To resolve the foregoing problem, this application proposes a data transmission method. Indication information in an overhead area indicates whether a block in a payload area of a current data frame is a rate compensation block, and a specific position of the rate compensation block in a specific data frame is restricted, to provide simple and effective rate compensation, reduce buffering and a processing delay, and improve system transmission performance.

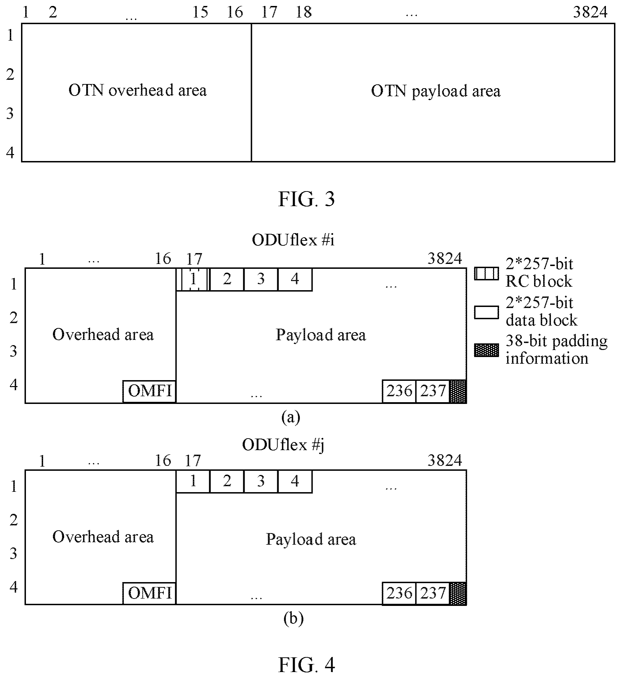

FIG. 3 is a diagram of a frame structure of an OTN frame. As shown in FIG. 3, the frame structure of the OTN frame is a single-byte structure of 4 rows*3824 columns, where former 4 rows*16 columns are an overhead area of the OTN frame, and remaining bytes are a payload area of the OTN frame. Specifically, for another feature of the OTN frame structure, refer to related descriptions in a current protocol.

Based on the OTN frame shown in FIG. 3, FIG. 4 is a diagram of a frame structure of an OTN frame according to an embodiment of this application. An example in which 800GE is mapped to an ODUflex frame is used. As shown in (a) in FIG. 4, an ODUflex #i frame includes a rate compensation block. A frame structure of the ODUflex #i frame is divided into 4 rows*3824 columns, each row includes 3824 bytes, former 4 rows*16 columns are defined as an overhead (overhead, OH) area, and latter 4 rows*3808 columns are defined as a payload area. The overhead area includes indication information #1, and the indication information #1 indicates whether a block (for example, a 1st block) in a plurality of blocks in the payload area is the rate compensation block. Specifically, the indication information #1 includes a first multiframe identifier and a second multiframe identifier. The first multiframe identifier may be an optical multiframe identifier (optical multiframe identifier, OMFI), and is located in a 4th row and a 16th column of the overhead area. The second multiframe identifier may be a multiframe alignment signal (multiframe alignment signal, MFAS), and is located in a 1st row and a 7th column of the overhead area. In other words, a combination of the first multiframe identifier and the second multiframe identifier indicates whether the block in the plurality of blocks in the payload area is the rate compensation block. The payload area is divided into the plurality of blocks, for example, 237 blocks. In this case, a size of each block may be 2*257 bits, where the 1st block is the rate compensation block (for example, an RC) and is used to carry rate compensation information, and remaining 236 blocks are all data blocks and are used to carry service data. In addition, the payload area further includes 38-bit padding information, for example, 6-bit PAD fixed padding and 32-bit cyclic redundancy check-32 (cyclic redundancy check-32, CRC-32) check information, where CRC-32 is used for checking the payload area. As shown in (b) in FIG. 4, an ODUflex #j frame does not include a rate compensation block. In other words, 237 blocks in a payload area of the ODUflex #j frame are all data blocks, and are used to carry service data. For another feature of a structure of the ODUflex #j frame, refer to related descriptions of the ODUflex #i frame. For brevity, details are not described herein again.

For example, the rate compensation block may be replaced with a rate adjustment block or a rate matching block. A name of the rate compensation block is not specifically limited in this application.

For example, a position of the rate compensation block in the payload area is predefined. Alternatively, a sending device may send indication information #2 to a receiving device. The indication information #2 indicates the position of the rate compensation block in the payload area, in other words, indicates a position of the block in the plurality of blocks in the payload area. The indication information #2 may be carried in the overhead area of the ODUflex #i frame, or may be sent independently of the ODUflex #i frame. In other words, the position of the rate compensation block in the payload area is not specifically limited in this application. In other words, the rate compensation block may be located at a position of any one of the 237 blocks in the payload area. In addition, a pattern of the rate compensation block is not specially limited in this application either. For example, the pattern may be all-0 or all-1. This is because the receiving device may pre-determine, by using the OMFI and the MFAS, that the rate compensation block is located at a fixed position of a known fixed frame (for example, the 1st block of the ODUflex #i frame). Therefore, no special pattern is needed for identification.

Optionally, positions of the indication information #1 and the indication information #2 in the overhead area are not specifically limited in this application.

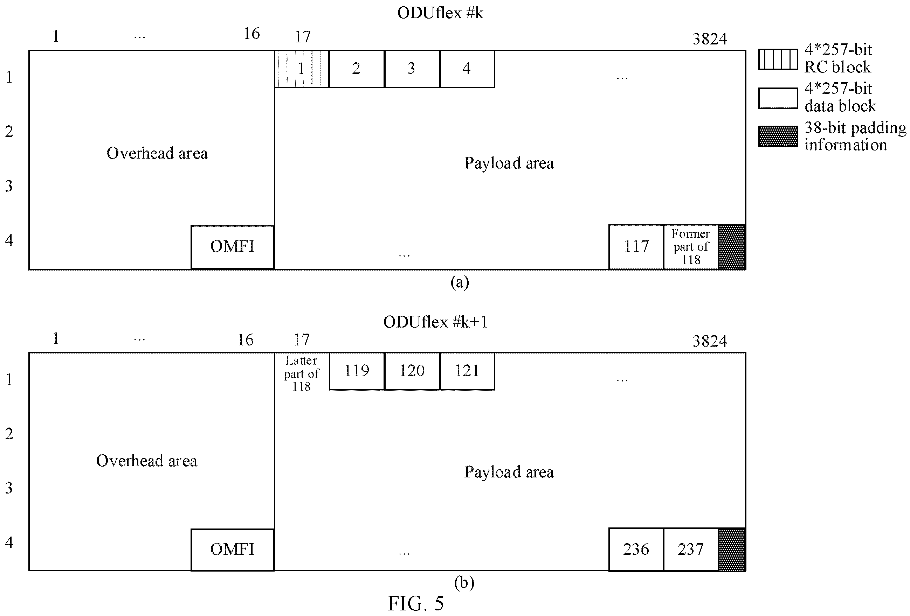

Based on the OTN frame shown in FIG. 3, FIG. 5 is a diagram of a frame structure of another OTN frame according to an embodiment of this application. An example in which 1.6TE is mapped to an ODUflex frame is used. As shown in (a) in FIG. 5, an ODUflex #k frame includes a rate compensation block. A frame structure of the ODUflex #k frame is divided into 4 rows*3824 columns, each row includes 3824 bytes, former 4 rows*16 columns are defined as an overhead area, and latter 4 rows*3808 columns are defined as a payload area. The overhead area includes indication information #1, and the indication information #1 indicates whether a block (for example, a 1st block) in a plurality of blocks in the payload area is the rate compensation block. Specifically, the indication information #1 includes a first multiframe identifier and a second multiframe identifier. The first multiframe identifier may be an OMFI, and is located in a 4th row and a 16th column of the overhead area. The second multiframe identifier may be an MFAS, and is located in a 1st row and a 7th column of the overhead area. In other words, a combination of the first multiframe identifier and the second multiframe identifier indicates whether the block in the plurality of blocks in the payload area is the rate compensation block. The payload area is divided into the plurality of blocks, in other words, the 1st block to a former part of a 118th block. In this case, a size of each block may be 4*257 bits, where the 1st block is the rate compensation block (for example, an RC) and is used to carry rate compensation information, and remaining blocks are all data blocks and are used to carry service data. In addition, the payload area further includes 38-bit padding information, for example, 6-bit PAD fixed padding and 32-bit CRC-32 check information, where CRC-32 is used for checking the payload area. As shown in (b) in FIG. 5, an ODUflex #k+1 frame does not include a rate compensation block. In other words, a plurality of blocks (namely, a latter part of a 118th block to a 237th block) in a payload area of the ODUflex #k+1 frame are all data blocks and are used to carry service data. For another feature of a structure of the ODUflex #k+1 frame, refer to related descriptions of the ODUflex #k frame. For brevity, details are not described herein again.

For a position of the rate compensation block in the payload area, a pattern of the rate compensation block, an indication manner of the position of the rate compensation block in the payload area, a name of the rate compensation block, a position of indication information in the overhead area, and the like, refer to related descriptions in FIG. 4. For brevity, details are not described herein again.

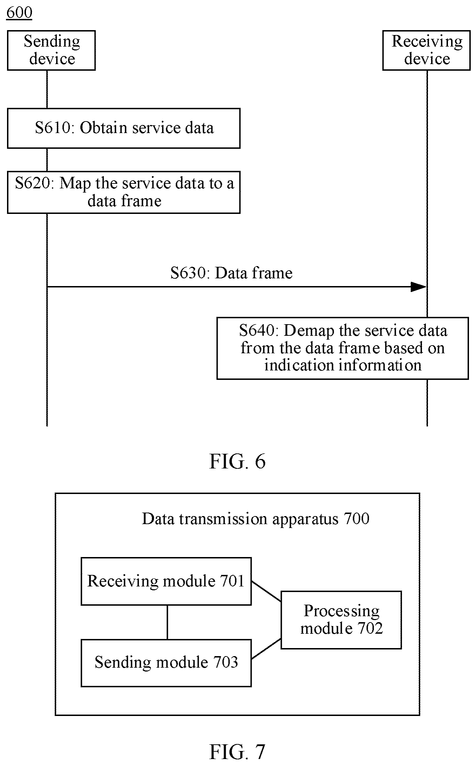

FIG. 6 is a schematic flowchart of a data transmission method 600 according to an embodiment of this application. As shown in FIG. 6, the method 600 is a schematic flowchart shown from a perspective of interaction between devices. A sending device may be an OTN device, or may be implemented by a component (for example, a chip or a chip system) of the OTN device. A receiving device may be an OTN device, or may be implemented by a component (for example, a chip or a chip system) of the OTN device. Specifically, the method 600 includes the following plurality of steps.

S610: The sending device obtains service data.

For example, the service data in this embodiment of this application is a service carried in an optical transport network or a metro transport network, for example, including but not limited to an Ethernet service, a packet service, and a wireless backhaul service. The service data may also be referred to as a service signal, client data, or client service data. It should be understood that a type of the service data is not limited in this embodiment of this application.

In this embodiment of this application, the sending device may be the foregoing OTN device (for example, the OTN device A shown in FIG. 1), and receive the service data from a client device (for example, the client device shown in FIG. 1). Alternatively, the sending device is another device that can implement the OTN device. A specific form of the sending device is not limited in this embodiment of this application, provided that a corresponding communication function can be implemented. It should be understood that a device may be referred to as a node or a node device, and the sending device may be referred to as a transmitter device, a transmit node, a transmitter, or a source node. Similarly, the receiving device may be referred to as a receiver device, a receive node, a receiver, or a sink node.

S620: The sending device maps the service data to a data frame.

The data frame may be an OTN frame, for example, an ODUk frame or an ODUflex frame. This is not limited in this application. It should be understood that another OTN frame for transport, a metro transport network (metro transport network, MTN) frame, or a new type of OTN frame and a new type of MTN frame that may be defined with development of an OTN technology and an MTN technology are also applicable to this application.

In an example, an example in which 800GE is mapped to an ODUflex frame is used. The sending device may map the service data to the ODUflex #i frame or the ODUflex #j frame shown in FIG. 4.

With reference to Table 1, the following describes an example in which the sending device maps the service data to the ODUflex #i frame or the ODUflex #j frame. A second multiframe identifier is a 256-multiframe identifier of the ODUflex frame, and corresponding second multiframe numbers are integers from 0 to 255 sequentially. In other words, there is an increase of 1 for each frame, and the second multiframe numbers are cyclically counted from 0 to 255. A first multiframe identifier indicates a quantity of 256-multiframes (namely, 256-multiframes each including 256 single frames) of the ODUflex frame, and corresponding first multiframe numbers are integers from 0 to 79 sequentially. In other words, there is an increase of 1 for each 256-multiframe, and the first multiframe numbers are cyclically counted from 0 to 79, indicating 80 256-multiframes. The sending device may indicate specific insertion positions of rate compensation blocks in 20k frames, namely, 20480 frames by using a combination of first multiframe identifiers and second multiframe identifiers. This means that rate compensation blocks with a size of one frame are inserted into every 20480 ODUflex frames (this is equivalent to inserting 237 2*257b rate compensation blocks into every 80 256-multiframes), and the 237 rate compensation blocks may be evenly inserted into every 20480 ODUflex frames. To avoid confusion of a sequence of two 257b code block streams, 2*257b may be kept as a rate adaptation unit. During rate compensation, a size of the rate compensation block is also 2*257b.

Table 1

| First multiframe identifier | Second multiframe identifier | Rate compensation block (Y/N) |
|---|---|---|
| 0 | 0 | Y |
| | ... | N |
| | 85 | Y |
| | ... | N |
| | 171 | Y |
| | ... | N |
| | 255 | |
| ... | ... | ... |
| 76 | 0 | Y |
| | ... | N |
| | 85 | Y |
| | ... | N |
| | 171 | Y |
| | ... | N |
| | 255 | |
| 77 | 0 | Y |
| | ... | N |
| | 85 | Y |
| | ... | N |
| 78 | ... | ... |
| 79 | 0 | Y |
| | ... | N |
| | 85 | Y |
| | ... | N |

For example, when the first multiframe number is 0, and the second multiframe number is 0, the rate compensation block is Y. In this case, the sending device may map the service data to a payload area of the ODUflex #i frame shown in (a) in FIG. 4, and insert the rate compensation block into a position of a 1st block in the payload area of the ODUflex #i frame. When the first multiframe number is 76, and the second multiframe number is 76, the rate compensation block is N. In this case, the sending device may map the service data to the ODUflex #j frame shown in (b) in FIG. 4, and does not need to insert a rate compensation block. A payload area of the ODUflex #j frame is all used to carry valid data blocks. For brevity, examples of whether to insert a rate compensation block corresponding to other values of the first multiframe identifier and the second multiframe identifier are not described one by one herein.

It can be learned from Table 1 that, in every 80 256-multiframes, when first multiframe numbers are 0 to 76, and second multiframe numbers are 0, 85, and 171, and when first multiframe numbers are 77 to 79, and second multiframe numbers are 0 and 85, the sending device may insert a rate compensation block into a position of a 1st block in a payload area of the data frame, and map the service data to other 236 blocks in the payload area of the data frame. In other words, in every 80 256-multiframes, one rate compensation block is separately inserted into positions of 1st blocks in payload areas of 0th frames, 85th frames, and 171st frames in 0th to 76th 256-multiframes, and 0th frames and 85th frames in 77th to 79th 256-multiframes, and payload areas of other frames (namely, 1st to 84th frames, 86th to 170th frames, and 172nd to 255th frames in the 0th to 76th 256-multiframes, and 1st to 84th frames and 86th to 255th frames in the 77th to 79th 256-multiframes) all carry valid data blocks, with no rate compensation block.

In another example, an example in which 1.6TE is mapped to an ODUflex frame is used. The sending device may map the service data to the ODUflex #k frame or the ODUflex #k+1 frame in FIG. 5.

With reference to Table 2, the following describes an example in which the sending device maps the service data to the ODUflex #k frame or the ODUflex #k+1 frame. A second multiframe identifier is a 256-multiframe identifier of the ODUflex frame, and corresponding second multiframe numbers are integers from 0 to 255 sequentially. In other words, there is an increase of 1 for each frame, and the second multiframe numbers are cyclically counted from 0 to 255. A first multiframe identifier indicates a quantity of 256-multiframes (namely, 256-multiframes each including 256 single frames), and corresponding first multiframe numbers are integers from 0 to 159 sequentially. In other words, there is an increase of 1 for each 256-multiframe, and the first multiframe numbers are cyclically counted from 0 to 159, indicating 160 256-multiframes. The sending device may indicate specific insertion positions of rate compensation blocks in 40k frames, namely, 40960 frames by using a combination of first multiframe identifiers and second multiframe identifiers. This means that rate compensation blocks with a size of two frames are inserted into every 40960 ODUflex frames (this is equivalent to inserting 237 4*257b rate compensation blocks into every 160 256-multiframes), and the 237 rate compensation blocks may be evenly inserted into every 40960 ODUflex frames. To avoid confusion of a sequence of four 257b code block streams, 4*257b may be kept as a rate adaptation unit. During rate compensation, a size of the rate compensation block is also 4*257b.

Table 2

| First multiframe identifier | Second multiframe identifier | Rate compensation block (Y/N) |
|---|---|---|
| 0 | 0 | Y |
| | ... | N |
| | 255 | |
| 1 | 0 | Y |
| | ... | N |
| | 128 | Y |
| | ... | N |
| | 255 | |
| 2 | 0 | Y |
| | ... | N |
| | 255 | |
| 3 | 0 | Y |
| | ... | N |
| | 128 | Y |
| | ... | N |
| | 255 | |
| ... | ... | ... |
| *155* | 0 | Y |
| | ... | N |
| | 255 | |
| ... | ... | ... |
| 159 | 0 | Y |
| | ... | N |
| | 255 | |

For example, when the first multiframe number is 0, and a value of the second multiframe identifier is 0, the rate compensation block is Y. In this case, the sending device may map the service data to a payload area of the ODUflex #k frame shown in (a) in FIG. 5, and insert the rate compensation block into a position of a 1st block in the payload area of the ODUflex #k frame. When the first multiframe number is 0, and a value of the second multiframe identifier is 1, the rate compensation block is N. In this case, the sending device may map the service data to the ODUflex #k+1 frame shown in (b) in FIG. 5, and does not need to insert a rate compensation block. A payload area of the ODUflex #k+1 frame is all used to carry valid data blocks. For brevity, examples of whether to insert a rate compensation block corresponding to other values of the first multiframe identifier and the second multiframe identifier are not described one by one herein.

It can be learned from Table 2 that, in every 160 256-multiframes, when first multiframe numbers are 0, 2, ..., 155, 156, 157, 158, and 159, and second multiframe numbers are 0, and when first multiframe numbers are 1, 3, ..., and 153, and second multiframe numbers are 0 and 128, the sending device may insert a rate compensation block into a position of a 1st block in a payload area of the data frame, and map the service data to other blocks in the payload area of the data frame.

It should be understood that Table 1 and Table 2 are merely diagrams of inserting a rate compensation block into a fixed position for ease of understanding, and there may alternatively be another transformation. A manner of inserting the rate compensation block into the fixed position is not specifically limited in this application. For example, the foregoing inserting of the rate compensation block into the position of the 1st block of the payload area is merely an example. The rate compensation block may alternatively be inserted into a position of any one of the plurality of blocks in the payload area, for example, a 237th block. Provided that it is ensured that rate compensation blocks are evenly inserted into same positions of payload areas of data frames including the rate compensation blocks, a data transmission error can be avoided, and system transmission performance can be improved. In an example, for the 80 256-multiframes in Table 1, one rate compensation block is separately inserted into positions of 237th blocks in payload areas of 0th frames and 85th frames in the 0th to 2nd 256-multiframes, and 0th frames, 85th frames, and 171st frames in the 3rd to 79th 256-multiframes, and payload areas of other data frames all carry valid data blocks. Alternatively, one rate compensation block is separately inserted into positions of 237th blocks in payload areas of 0th frames and 85th frames in the 0th to 65th 256-multiframes, and 0th frames, 85th frames, and 171st frames in the 66th to 79th 256-multiframes, and payload areas of other data frames all carry valid data blocks. In another example, for the 160 256-multiframes in Table 2, one rate compensation block is separately inserted into positions of 237th blocks in payload areas of 0th frames and 128th frames in 0th to 77th 256-multiframes, and positions of 237th blocks in payload areas of 128th frames in 79th to 159th 256-multiframes, and payload areas of other data frames all carry valid data blocks.

S630: The sending device sends the data frame to the receiver device.

Correspondingly, the receiving device receives the data frame from the transmitter device.

For example, the sending device may directly send the data frame (for example, an OTN frame) to the receiving device, or may encapsulate the data frame into a bearer container ODU frame, and then send the ODU frame to the receiving device. This is not specifically limited in this application.

S640: The receiving device demaps the service data from the data frame based on indication information.

For example, after receiving the data frame, the receiving device queries Table 1 or Table 2 based on indication information #1 (for example, values of an MFAS and an OMFI) in an overhead area of the data frame, to further determine whether the sending device inserts a rate compensation block into a fixed position of the payload area of the data frame. If the indication information #1 indicates that a block in a plurality of blocks in the payload area is the rate compensation block, the receiving device deletes the rate compensation block, in other words, the block in the plurality of blocks in the payload area, and then demaps a data block other than the block in the plurality of blocks in the payload area, to obtain the service data. If the indication information #1 indicates that a block in a plurality of blocks in the payload area is not a rate compensation block, it indicates that all the plurality of blocks in the payload area of the data frame are used to carry the service data. In this case, the receiving device may demap the data frame to obtain the service data.

In an example, mapping 800GE to an ODUflex frame is used as an example. Assuming that the receiving device receives the ODUflex #i frame shown in (a) in FIG. 4, and values of an OMFI and an MFAS in an overhead area of the ODUflex #i frame are respectively 0 and 85, the receiving device obtains, by querying Table 1, that an inserted compensation block is Y, and may further determine that the sending device inserts the rate compensation block into a position of a 1st block in a payload area of the ODUflex #i frame. In this case, the receiving device deletes the rate compensation block, and demaps other 236 blocks in the payload area, to obtain the service data.

It should be noted that, in this embodiment of this application, an implementation of how the receiving device demaps the service data from the received data frame is not limited. For details, refer to descriptions of demapping in a current related technology.

It should be understood that the specific examples shown in FIG. 4 and FIG. 5 in embodiments of this application are merely intended to help a person skilled in the art better understand embodiments of this application, but are not intended to limit the scope of embodiments of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that, in some of the foregoing embodiments, a device in an existing network architecture (for example, an OTN device) is mainly used as an example for description. A specific form of the device is not limited in embodiments of this application. For example, all devices that can implement a same function in the future are applicable to this application.

The foregoing describes in detail the data transmission method provided in embodiments of this application. The foregoing data transmission method is mainly described from a perspective of interaction between a receiving device and a sending device. It may be understood that, to implement the foregoing functions, the receiving device and the sending device include corresponding hardware structures and/or software modules for performing the functions.

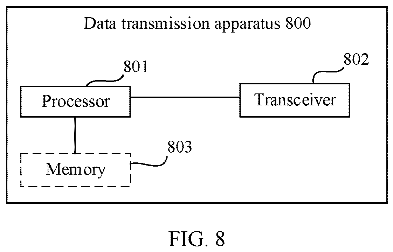

The following describes, in detail with reference to FIG. 7 and FIG. 8, data transmission apparatuses in embodiments of this application. It should be understood that descriptions of apparatus embodiments correspond to the descriptions of the method embodiment. Therefore, for content that is not described in detail, refer to the method embodiment above. For brevity, details of a part of content are not described herein again.

In embodiments of this application, the sending device or the receiving device may be divided into functional modules based on the method example, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 7 is a diagram of a structure of an OTN apparatus 700 according to an embodiment of this application. The apparatus 700 includes a receiving module 701. The receiving module 701 may be configured to implement a corresponding receiving function. The receiving module 701 may also be referred to as a receiving unit.

The apparatus 700 further includes a processing module 702. The processing module 702 may be configured to implement a corresponding processing function.

The apparatus 700 further includes a sending module 703. The sending module 703 may be configured to implement a corresponding sending function. The sending module 703 may also be referred to as a sending unit.

Optionally, the apparatus 700 further includes a storage unit. The storage unit may be configured to store at least one of instructions, data, and another configuration parameter. The processing module 702 may read content stored in the storage unit, so that the apparatus implements actions of a related apparatus in the foregoing method embodiment.

The apparatus 700 may be configured to perform actions performed by the sending device in the foregoing method embodiment. In this case, the apparatus 700 may be a component of the sending device. The receiving module 701 is configured to perform receiving-related operations of the sending device in the foregoing method embodiments. The processing module 702 is configured to perform processing-related operations of the sending device in the foregoing method embodiment. The sending module 703 is configured to perform sending-related operations of the sending device in the foregoing method embodiment.

It should be understood that a specific process in which the modules perform the foregoing corresponding steps is described in detail in the foregoing method embodiment. For brevity, details are not described herein again.

FIG. 8 is a diagram of a structure of an OTN apparatus 800 according to an embodiment of this application. As shown in FIG. 8, the apparatus 800 includes a processor 801, a transceiver 802, and a memory 803. The memory 803 is optional. The apparatus 800 may be used in a sending device or a receiving device.

When the apparatus 800 is used in the sending device, the processor 801 and the transceiver 802 are configured to implement the method performed by the sending device shown in FIG. 6. In an implementation process, steps of a processing procedure may be performed by using an integrated logic circuit of hardware in the processor 801 or instructions in a form of software to complete the method performed by the sending device in the foregoing accompanying drawing. The transceiver 802 is configured to receive a data frame, to send the data frame to a peer device (also referred to as a receiving device).

When the apparatus 800 is used in the receiving device, the processor 801 and the transceiver 802 are configured to implement the method performed by the receiving device shown in FIG. 6. In an implementation process, steps of a processing procedure may be performed by using an integrated logic circuit of hardware in the processor 801 or instructions in a form of software to complete the method performed by the receiving device in the foregoing accompanying drawing. The transceiver 802 is configured to receive a data frame sent by a peer device (also referred to as a sending device), to send the data frame to the processor 801, so that the processor 801 performs subsequent processing.

The memory 803 is configured to store instructions, so that the processor 801 can be configured to perform the steps mentioned in the foregoing figure. Alternatively, the memory 803 is configured to store other instructions, to configure a parameter of the processor 801 to implement a corresponding function.

It should be noted that, in the diagram of the hardware structure of the network device shown in FIG. 2, the processor 801 and the memory 803 may be located in a tributary board, or may be located in a tributary-line integrated board. Alternatively, there are a plurality of processors 801 and a plurality of memories 803, which are respectively located in a tributary board and a line board, and the two boards cooperate to complete the foregoing method steps.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA, the another programmable logic device, the discrete gate, the transistor logic device, or the discrete hardware component, the memory (a storage module) may be integrated into the processor.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, and it should be considered that the implementation is in the protection scope of this application.

In several embodiments provided in this application, it should be understood that the disclosed apparatus and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to implement the solutions provided in this application. In addition, functional units in embodiments of this application may be integrated into one unit, each of the units may exist alone physically, or two or more units may be integrated into one unit.

All or some of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, an optical medium, a semiconductor medium, or the like. For example, the foregoing usable medium may include but is not limited to any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, wherein the method is applied to a sending device and comprises:

   obtaining service data;
   mapping the service data to a data frame, wherein the data frame comprises an overhead area and a payload area, the overhead area comprises indication information, the payload area comprises a plurality of blocks, and the indication information indicates whether the plurality of blocks in the payload area are rate compensation blocks; and
   sending the data frame.

2. The method according to claim 1, wherein when a bit rate of the data frame is 800 Gbit/s Ethernet, a size of the rate compensation block is a multiple of 2*257 bits.

3. The method according to claim 1, wherein when a bit rate of the data frame is 1.6 Tbit/s Ethernet, a size of the rate compensation block is a multiple of 4*257 bits.

4. The method according to any one of claims 1 to 3, wherein a position of the rate compensation block in the payload area is predefined.

5. The method according to any one of claims 1 to 4, wherein the payload area further comprises 38-bit padding information.

6. The method according to any one of claims 1 to 5, wherein the payload area further comprises 6-bit fixed padding and 32-bit cyclic redundancy check-32 CRC-32 check information.

7. The method according to any one of claims 1 to 6, wherein the data frame is an optical transport network OTN frame.

8. A data transmission method, wherein the method is applied to a receiving device and comprises:

   receiving a data frame, wherein the data frame comprises an overhead area and a payload area, the overhead area comprises indication information, the payload area comprises a plurality of blocks, and the indication information indicates whether the plurality of blocks in the payload area are rate compensation blocks; and
   demapping service data from the data frame based on the indication information.

9. The method according to claim 8, wherein demapping the service data from the data frame based on the indication information comprises:

   when the indication information indicates that a block in the plurality of blocks in the payload area is the rate compensation block, deleting the block in the plurality of blocks in the payload area; and
   obtaining the service data carried in a block other than the block in the plurality of blocks in the payload area.

10. The method according to claim 8 or 9, wherein when a bit rate of the data frame is 800 Gbit/s Ethernet, a size of the rate compensation block is a multiple of 2*257 bits.

11. The method according to claim 8 or 9, wherein when a bit rate of the data frame is 1.6 Tbit/s Ethernet, a size of the rate compensation block is a multiple of 4*257 bits.

12. The method according to any one of claims 8 to 11, wherein a position of the rate compensation block in the payload area is predefined.

13. The method according to any one of claims 8 to 12, wherein the payload area further comprises 38-bit padding information.

14. The method according to any one of claims 8 to 13, wherein the payload area further comprises 6-bit fixed padding and 32-bit cyclic redundancy check-32 CRC-32 check information.

15. The method according to any one of claims 8 to 14, wherein the data frame is an optical transport network OTN frame.

16. An optical transport network OTN apparatus, wherein the OTN apparatus comprises a processor and a communication interface, the communication interface is configured to send an OTN frame to a communication apparatus other than a communication apparatus comprising the chip, the processor is configured to perform the method according to any one of claims 1 to 7; or the communication interface is configured to receive an OTN frame and transmit the OTN frame to the processor, and the processor is configured to perform the method according to any one of claims 8 to 15.

17. The OTN apparatus according to claim 16, wherein the OTN apparatus further comprises an optical transceiver.

18. An optical transport network OTN system, comprising at least one apparatus according to claim 16 or 17.

19. A computer-readable storage medium, wherein the computer-readable storage medium stores computer instructions; and when the computer instructions are run on a computer, the method according to any one of claims 1 to 7 or the method according to any one of claims 8 to 15 is implemented.

FIG. 1

FIG. 2

FIG. 3

FIG. 4

ODUflex #k

1 ... 16 17 3824

| | | | 4*257-bit RC block |
| | | | 4*257-bit data block |
| | | | 38-bit padding information |

1 | Overhead area | 1 | 2 | 3 | 4 | ...
2 | | Payload area
3
4 | OMFI | ... | 117 | Former part of 118 |

(a)

ODUflex #k+1

1 ... 16 17 3824

1 | Overhead area | Latter part of 118 | 119 | 120 | 121 | ...
2 | | Payload area
3
4 | OMFI | ... | 236 | 237 |

(b)

FIG. 5

EP 4 664 799 A1

600

```
Sending                                    Receiving
device                                      device
   │                                            │
   │                                            │
┌──┴────────────────────────┐                   │
│ S610: Obtain service data │                   │
└──┬────────────────────────┘                   │
   │                                            │
┌──┴────────────────────────┐                   │
│ S620: Map the service data to a │             │
│           data frame      │                    │
└──┬────────────────────────┘                   │
   │                                            │
   │          S630: Data frame                  │
   │────────────────────────────────────────────▶│
   │                                            │
   │                          ┌─────────────────┴──────────────┐
   │                          │ S640: Demap the service data   │
   │                          │ from the data frame based on   │
   │                          │    indication information      │
   │                          └─────────────────┬──────────────┘
   │                                            │
```

FIG. 6

```
┌──────────────────────────────────────────────────┐
│        Data transmission apparatus 700             │
│                                                    │
│  ┌────────────────────────┐                        │
│  │ Receiving module 701   │╲                       │
│  └───────────┬────────────┘ ╲   ┌────────────────┐ │
│              │               ╲  │  Processing    │ │
│              │                  │  module 702    │ │
│  ┌───────────┴────────────┐  ╱  └────────────────┘ │
│  │ Sending module 703     │╱                       │
│  └────────────────────────┘                        │
└──────────────────────────────────────────────────┘
```

FIG. 7

Data transmission apparatus 800

801

Processor

802

Transceiver

803

Memory

FIG. 8

## INTERNATIONAL SEARCH REPORT

| International application No. |
|---|
| **PCT/CN2024/080051** |

| A. | CLASSIFICATION OF SUBJECT MATTER |
|---|---|

H04J 3/16(2006.01)i

According to International Patent Classification (IPC) or to both national classification and IPC

| B. | FIELDS SEARCHED |
|---|---|

Minimum documentation searched (classification system followed by classification symbols)

IPC: H04J H04Q

Documentation searched other than minimum documentation to the extent that such documents are included in the fields searched

Electronic data base consulted during the international search (name of data base and, where practicable, search terms used)

CNTXT, WPABS, ENTXT, VEN: 光传送, 光传输, 指示, 光复帧指示, 复帧对齐信号, 速率, 速度, 补偿, 调整, 适配, 开销, 净荷, OTN, ODU, OTU, identifier, OMFI, MFAS, rate, compensation, overhead, OH

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113630206 A (ZTE CORP.) 09 November 2021 (2021-11-09)<br>claims 1-12, description, paragraphs [0025]-[0072], and figures 1-5 | 1-19 |
| Y | CN 112511921 A (ZTE CORP.) 16 March 2021 (2021-03-16)<br>description, paragraphs [0066]-[0076] | 1-19 |
| A | CN 110557217 A (HUAWEI TECHNOLOGIES CO., LTD.) 10 December 2019 (2019-12-10)<br>entire document | 1-19 |
| A | EP 2738964 A1 (ALCATEL LUCENT) 04 June 2014 (2014-06-04)<br>entire document | 1-19 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 June 2024** | **11 June 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080051**

| Patent document cited in search report | | | Publication date (day/month/year) | Patent family member(s) | | | Publication date (day/month/year) |
|---|---|---|---|---|---|---|---|
| CN | 113630206 | A | 09 November 2021 | None | | | |
| CN | 112511921 | A | 16 March 2021 | WO | 2021190030 | A1 | 30 September 2021 |
| | | | | KR | 20220137695 | A | 12 October 2022 |
| | | | | US | 2023135776 | A1 | 12 October 2022 |
| CN | 110557217 | A | 10 December 2019 | WO | 2019228201 | A1 | 05 December 2019 |
| | | | | EP | 3796577 | A1 | 24 March 2021 |
| | | | | US | 2021084383 | A1 | 18 March 2021 |
| EP | 2738964 | A1 | 04 June 2014 | WO | 2014086592 | A1 | 12 June 2014 |
| | | | | US | 2015288538 | A1 | 08 October 2015 |
| | | | | CN | 104904148 | A | 09 September 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310278199